# EUROPÄISCHE PATENTSCHRIFT

(11) **EP 2 864 401 B1**
(45) Veröffentlichungstag und Bekanntmachung des Hinweises auf die Patenterteilung: **13.05.2020**
(21) Anmeldenummer: 13734698.7
(22) Anmeldetag: 25.06.2013
(51) Int. Cl.: C08J 5/24, B32B 5/08, B32B 5/26, B32B 5/28

(54) **FASERVERBUNDBAUTEIL UND VERFAHREN ZUR HERSTELLUNG DESSELBEN**
FIBRE COMPOSITE COMPONENT AND PROCESS FOR MANUFACTURING THE SAME
ÉLÉMENT COMPOSITE FIBREUX ET PROCÉDÉ DE PRODUCTION DE CELUI-CI

(30) Priorität: 25.06.2012 DE 102012105500
(43) Veröffentlichungstag der Anmeldung: 29.04.2015
(73) Patentinhaber: Fraunhofer-Gesellschaft zur Förderung der angewandten Forschung e.V., 80686 München (DE)
(72) Erfinder: ENDRES, Hans-Josef, 30890 Barsinghausen (DE)
(74) Vertreter: Kröncke, Rolf
(86) Internationale Anmeldenummer: PCT/EP2013/063290
(87) Internationale Veröffentlichungsnummer: WO 2014/001340

(56) Entgegenhaltungen:
- WO-A1-2007/025782
- WO-A1-2009/035403
- GB-A- 1 373 782
- US-A- 3 897 588
- US-A- 4 540 624
- US-A1- 2005 257 847
- US-A1- 2009 286 059
- DATABASE WPI Week 198119 Thomson Scientific, London, GB; AN 1981-33348D XP002712432, & JP S56 28222 A (SHIN KOBE ELECTRIC MACHINERY) 19. März 1981 (1981-03-19)

## Beschreibung

Die Erfindung betrifft Faserverbundbauteile aus Faserhalbzeug und einer Matrix, wobei dieses Faserverbundbauteil teilweise auf Polymerfasern, insbesondere bio-basierten Fasern beruht. Weiterhin betrifft die Erfindung ein Verfahren zur Herstellung eines Faserverbundbauteils aus Faserhalbzeug, wobei dieses Faserverbundbauteil teilweise auf Polymerfasern, insbesondere bio-basierten Fasern beruht.

Faserverbundbauteile werden üblicherweise aus trockenen Faserhalbzeugen, die in der Regel aus miteinander verwobenen Fasern gebildet sind, durch Tränkung dieser mit einem Matrixharz und Aushärtung des Harzes oder durch Kombination von Fasern und thermoplastischen Kunststoffen mit anschließendem Pressen oder anderen Kunststoffverarbeitungsverfahren hergestellt. Übliche Faserverbundteile bestehen aus Kohlefasern, sogenannte kohlefaserverstärkte Bauteile (CFK, kohlefaserverstärkter Kunststoff bzw. carbon-fiber-reinforced plastic) oder glasfaserverstärkte Bauteile (glasfaserverstärkter Kunststoff, GFK bzw. glass-fiber-reinforced plastic).

Solche kohlefaserverstärkten Bauteile bzw. glasfaserverstärkten Bauteile werden mittlerweile in vielen Bereichen eingesetzt. Insbesondere aufgrund ihres hohen Leichtbaupotentials und aufgrund ihrer hohen gewichtsspezifischen Eigenschaften wird der Kohlefaser eine große Zukunft vorhergesagt. Mittlerweile finden kohlefaserverstärkte Kunststoffe als kohlefaserverstärkte Bauteile in vielen Bereichen Anwendung, z. B. im Flugzeugbau, im Fahrzeugbau und für Sportgeräte, aber auch im Bauwesen sowie als Rotorblätter für Windenergieanlagen, Rümpfe im Schiffbau, Rohre, Verkleidungen, etc.. Glasfaserverstärkte Kunststoffe finden u.a. aufgrund ihrer guten elektrischen Isolationswirkung und ihrem niedrigen Preis in der Elektrotechnik oder bei Gerätegehäusen Anwendung.

Als Basis dieser verstärkten Kunststoffe kommen duroplastische oder thermoplastische Kunststoffe in Frage. Diese so hergestellten Faserkunststoffverbunde können z. B. mit Endlosfasern, also langfasrigen Fasern, oder kurzen Fasern verwendet werden. Aufgrund der Kurzfasrigkeit weisen kurzfasrig verstärkte Bauteile ein quasi isotropes Verhalten auf, während langkettige oder endlosfaserverstärkte Bauteile ein richtungsabhängiges Materialverhalten aufzeigen, d. h. bei langfasrigen oder endlosfaserverstärkten Kunststoffen ist die Festigkeit und Steifigkeit des Bauteils in Faserrichtung wesentlich höher als quer zur Faserrichtung. Daher werden häufig einzelne Faserlagen in verschiedenen Richtungen verlegt und anschließend mit der Matrix durch Aushärtung oder Schmelzen und Erstarren verbunden. Üblicherweise werden die glasfaser- bzw. kohlefaserverstärkten Bauteile mittels bekannter Verfahren einschließlich Prepreg im Press- oder Autoklavverfahren, Faserwickeln oder Formpressen hergestellt. Häufig findet allerdings nach wie vor ein Handlaminieren der CFK-Bauteile oder GFK-Bauteile statt. Dieses geschieht insbesondere bei großen Bauteilen, wie sie z. B. im Flugzeugbau oder für Rotorblätter genutzt werden.

Kohlefaserverstärkte Bauteile haben allerdings, abgesehen von guten gewichtsspezifischen Eigenschaften auch Nachteile. So sind sie auch auf lange Sicht relativ kostenintensiv. Sie zeigen eine schlechte akustische Dämmungs- und Dämpfungseigenschaften und es handelt sich in der Regel um einen erdölbasierten Rohstoff mit energieintensiver Herstellung und schlechter CO₂-Bilanz bei der Herstellung. Außerdem zeigen die CFK ein schlechtes Splitterverhalten auf, insbesondere sind sie anfällig bei Zug-Druckwechsel-Belastungen. Auch allein mit Glasfaser verstärkte Bauteile haben entsprechende Nachteile, wie z.B. eine höhere Dichte, ein höherer Verschleiß der Verarbeitungsmaschinen, eine haptisch schlechte Oberfläche, oder ein hoher Ascheanteil bei der Verbrennung.

Bio-basierte Fasern sind Fasern, die mit Biogrundstoffen hergestellt werden, z. B. bio-basiertes Polyethylen usw. und schließen weiterhin Naturfasern ein. Naturfasern sind alle Fasern, die von natürlichen Quellen wie Pflanzen, Tieren oder Mineralien stammen und sich ohne weitere chemische Umwandlungsreaktion direkt einsetzen lassen. Die bio-basierten Fasern schließen weiterhin cellulose-basierte Fasern wie Cellulose-Regenerate und insbesondere cellulosebasierte Naturfasern ein. Typische Vertreter von Naturfasern sind Bambusfasern, Hanffasern, Jute, Flachs, Sisal, Kokos, Holzfasern und Holzmehl, Papierfasern.

Polymerfasern, wie bio-basierte Fasern, z.B. Naturfasern, zeichnen sich durch einen sehr niedrigen Preis, gute akustische Dämmwirkung und einer noch niedrigeren Dichte als Kohlefaser aus. Weiterhin zeigen sie ein gutmütiges Versagensverhalten, eine deutliche höhere Dehnbarkeit und ihre CO₂-Bilanz bei der Herstellung ist wesentlich günstiger als die von Kohlefasern oder Glasfasern. Bei Naturfasern oder bio-basierten Fasern allgemein handelt es sich um erneuerbare, auch langfristig verfügbare Rohstoffe und bei Naturfasern wird die Synthese-Vorleistung der Natur genutzt. Allerdings weisen auch Naturfasern Nachteile auf. Sie zeigen eine sehr geringe thermische Belastbarkeit und niedrige absolute Materialkennwerte auf.

Aufgabe der vorliegenden Erfindung ist die Bereitstellung von neuen Faserverbundbauteilen, die die obigen Nachteile der bisher beschriebenen Verbundbauteile, insbesondere in Bezug auf den Preis aber auch auf die technischen Kennzahlen, wie der Bruchfestigkeit, verbessern. Insbesondere soll das Faserverbundbauteil günstig herstellbar sein und gute akustische Eigenschaften aber auch mechanische Versagensverhalten aufzeigen. Die Ökobilanz soll gegenüber kohlefaserverstärkten oder glasfaserverstärkten Bauteilen verbessert sein.

Die gestellte Aufgabe wird erfindungsgemäß durch ein Faserverbundbauteil wie in Anspruch 1 definiert und durch ein Verfahren zu dessen Herstellung wie in Anspruch 5 definiert gelöst. Bevorzugte Ausführungsformen sind in den jeweiligen Unteransprüchen angegeben. Dadurch können die einzelnen Vorteile der verschiedenen Fasern gezielt und synergetisch genutzt und die jeweiligen Nachteile eliminiert werden.

Ein ähnliches Faserverbundbauteil wird in der WO 2007/025782 A1 offenbart.

Unter dem Ausdruck "Flächengebilde" wird vorliegend ein Vlies, eine Maschenware, wie ein Gestrick, ein nicht maschenbildendes System, wie Gewebekomplexe, Gewebe, Gelage und Geflechte, und Rovings verstanden.

Unter dem Ausdruck "Polymerfaser" wird vorliegend ein aus Monomeren aufgebautes, Fasern ausbildendes Polymer verstanden. Der Ausdruck schließt insbesondere bio-basierte Polymerfasern aber auch petrochemische Polymerfasern ein.

Erfindungsgemäß ist die Polymerfaser eine bio-basierte Faser ausgewählt aus biobasierten Polyamiden oder Polyamidcopolymeren, PLA, Bio-PET oder anderen partiell oder vollständig biobasierten Polyestern. Es ist klar, dass auch Mischungen verschiedener Polymerfasern eingesetzt werden können.

Es können weiterhin für die Gewebe der Faserhalbzeuge Garne verwendet werden, die aus einer Faserart bestehen oder Garne, die aus verschiedenen Faserarten bestehen, z.B. ein Gemisch aus verschiedenen Polymerfasern oder ein Gemisch aus Polymerfasern und Kohlefasern. In den Faserhalbzeugen können verschiedene Flächengebilde, wie Gewebe, Gestricke oder Gewirke vorliegen.

Es zeigte sich, dass die erfindungsgemäßen Faserverbundbauteile die Nachteile der Faserverbundbauteile mit dem jeweils alleinigen Einsatz von Kohlefasern, Glasfasern oder Polymerfasern, wie Naturfasern, überwinden und ihre Eigenschaften in Kombination als Verstärkungskomponenten in Faserverbundwerkstoffen verbessert werden können. So zeigten die erfindungsgemäßen Faserverbundbauteile, die im Folgenden auch als Hybridverbundbauteile oder Hybridverbundwerkstoffe bezeichnet werden, z.B. bei einer Biegebeanspruchung ein verbessertes Gesamteigenschaftsprofil, d. h. es können verbesserte akustische Dämmwirkungen bei gleichzeitig geringerer Dichte oder geringerem Preis durch eine belastungsorientierte Kombination von Faserhalbzeugen aus bio-basierten Fasern und Faserhalbzeugen aus Kohle- oder Glasfasern bzw. durch Verwendung von Faserhalbzeugen aus Mischgeweben aus bio-basierten Fasern und Kohlefasern erhalten werden. Diese Optimierung des Eigenschaftsprofil kann z.B. dadurch erfolgen, in dem die Kohlefaser aufweisende Faserhalbzeuge in die insbesondere im Falle einer Biegung höher beanspruchten Außenbereiche gelegt werden, während biobasierte Fasern in den Mittellagen zum Einsatz kommen oder Kohle- und Glasfaser in die höher beanspruchten Richtungen und die bio-basierten Fasern in die weniger beanspruchten Richtungen orientiert werden.

Hierdurch werden nicht nur ein verbessertes technisches Eigenschaftsprofil erreicht, sondern auch der Preis dieser Faserverbundbauteile signifikant reduziert, da bio-basierte Fasern kostengünstiger sind als Kohlefasern.

Diese erfindungsgemäßen Faserverbundbauteile zeigen eine verbesserte akustische Dämmung und, darüber hinaus, sind die ökologischen Kennwerte gegenüber reinen kohlefaserverstärkten oder glasfaserverstärkten Bauteilen signifikant verbessert. Zusätzlich kann die Dichte aufgrund der Verwendung der bio-basierten Fasern verringert werden, so dass diese Eigenschaften ebenfalls gegenüber reinen kohlefaserverstärkten oder glasfaserverstärkten Bauteilen verbessert sind.

Weiterhin ist bevorzugt, dass die verschiedenen Fasern entsprechend der Anforderungen angeordnet vorliegen. D.h., bevorzugt sind die einzelnen Faserhalbzeuge und/oder die Fasern in den Mischgeweben der Faserhalbzeuge aus materialtechnischer Sicht im Bauteil örtlich so angeordnet, um den Anforderungen durch den Hauptbeanspruchungsort gerecht zu werden. Ein Beispiel hierfür ist die Biegebeanspruchung. Das bedeutet, dass das erfindungsgemäße Faserverbundbauteil eines ist, bei dem im Falle einer Biegebeanspruchung die Faserhalbzeuge aus bio-basierten Fasern bevorzugt im Innenbereich des Faserverbundbauteils und des Faserhalbzeugs aus Kohlefasern im äußeren Bereich bei einem mehrschichtigen oder mehrlagigen Aufbau des Faserverbundbauteils angeordnet sind oder Kohle- und Glasfasern in die höher beanspruchten Richtungen und die bio-basierten Fasern in die weniger beanspruchten Richtungen orientiert werden. Umgekehrt kann es auch vorteilhaft sein, die bio-basierten Fasern in den Außenbereich anzuordnen, und die höher belastbaren Kohlefasern im Innenbereich anzuordnen, z. B. bei einer Zugbelastung plus Dämmung mit einer nahezu konstanten Beanspruchung über den gesamten Querschnitt, wobei die bio-basierten Fasern mit Dämmwirkung außen angeordnet sind.

Eine andere Möglichkeit ist, bei einer Materialermüdung durch Biegewechselbeanspruchung eine weniger feste und bio-basierte Faser in den stärker dehnungsbeanspruchten Außenbereich zu legen.

Unter "mehrschichtig" wird vorliegend verstanden, dass mehrere Flächengebilde, wie Gewebe, Gestricke oder Gewirke in einem Faserhalbzeug vorliegen. Unter "mehrlagig" wird vorliegend verstanden, dass mehrere Lagen von Faserhalbzeugen vorliegen.

Es ist weiterhin möglich, dass erfindungsgemäß in den Faserhalbzeugen Glasfasern vorliegen und diese die Kohlefasern ggf. teilweise oder vollständig ersetzen. Eine weitere Ausführungsform der Erfindung betrifft somit auch Faserverbundbauteile, bei denen die Faserhalbzeuge mit Glasfasern verstärkt sind und diese Glasfasern mit bio-basierten Fasern kombiniert werden. Bei den Faserhalbzeugen kann es sich dabei sowohl um solche, gebildet aus Langfasern bzw. Endlosfasern, als auch um solche mit Kurzfasern, handeln. Auch eine Kombination aus Kurzfasern und kurzfaserverstärkten Faserhalbzeugen sowie langfaser- bzw. endlosfaserverstärkten Faserhalbzeugen ist möglich.

Die erfindungsgemäßen Faserverbundbauteile sind insbesondere solche angepasst zur Verwendung in akustischen Bereichen aber auch im Transportbereich wie z.B. Fahrzeugbau, Luftfahrt, Schienenfahrzeuge, Schiffbau, Sportgerätebereich, Bau- und Möbelbereich, Maschinengehäuse, Elektrogeräte usw. Die erfindungsgemäßen Faserverbundbauteile zeichnen sich dadurch aus, dass sie verbessertes Splitterverhalten bei Zug-Druckwechsel-Belastungen, wie Vibrationen, aufzeigen. Im Gegensatz zu kohlefaserverstärkten Faserverbundbauteilen, die ein schlechtes digitales mechanisches Versagensverhalten bei dynamischen und schlagartigen Beanspruchung aufzeigen und als ganzes Bauteil brechen, erlaubt die Kombination mit zäheren bio-basierten Fasern eine Verbesserung hiervon. Die erfindungsgemäßen Faserverbundbauteile zeigen somit verbesserte Biegefestigkeit und ein verbessertes Crash-Verhalten. Durch Kombination von Kohlefaser und bio-basierter Faser, oder Glasfaser und bio-basierter Faser, oder Kohle- und Glasfasern mit biobasierten Fasern ist es möglich, das spezifischen Eigenschaftsprofil der Faserverbundbauteile in Bezug auf Festigkeit in Kombination mit Gewicht und insbesondere in Kombination mit dem Preis zu verbessern und z. B. akustische Probleme bei kohlefaserverstärkten Bauteilen oder glasfaserverstärkten Bauteilen zu überwinden.

Auch aus optischen Gründen kann eine bestimmte Faseranordnung gewünscht sein. Um ein natürliches Aussehen zu erhalten, können Naturfasern außen angeordnet sein, während die Kohlefaser innen liegt oder umgekehrt für eine technische Optik.

Das erfindungsgemäße Verfahren ist bevorzugt eines, bei dem mindestens ein Faserhalbzeug aus bio-basierten Fasern zwischen zwei Faserhalbzeugen aus Kohlefasern und/oder Glasfasern angeordnet wird. Alternativ kann es sich bei den Faserhalbzeugen auch um solche aus einem Mischgewebe oder einem anderen Flächengebilde aus Kohlefasern und bio-basierter Faser handeln oder gar um Mischgarne aus denen entsprechende Gewebe erzeugt werden.

In einer weiteren bevorzugten Ausführungsform ist das erfindungsgemäße Verfahren eines, bei dem das Faserverbundbauteil weiterhin ein Glasfasergewebe oder ein Mischgewebe mit Glasfasern umfasst oder die Glasfaser die Kohlefaser in den Faserhalbzeugen teilweise oder vollständig ersetzt.

Bei dem erfindungsgemäßen Verfahren können dabei solche Faserhalbzeuge eingesetzt werden, die aus Lang- oder Endlosfasern hergestellt sind und/oder solche Faserhalbzeuge, die Kurzfasern der genannten Fasern umfassen. Weiterhin ist es möglich, dass die Faserhalbzeuge oder Faserverbundbauteile auch Schichten aus Langfaserverbundwerkstoffen und Kurzfaserverbunden umfassen.

Dem Fachmann sind geeignete Verfahren zur Herstellung der Faserverbundbauteile bekannt, z. B: durch Prepreg im Press- oder Autoklavverfahren, Handlaminieren, Wickeltechniken, Spritzgießverfahren usw.

**Tabelle 1**

| | **Duromere Matrix** | **Thermoplastische Matrix** |
|---|---|---|
| **Lang- / Endlosfasern** | - Handlaminieren | - Press-/Druck-/Vakuumverfahren |
| | - Press-/Druck-/Vakuumverfahren | - Pultrusion/Profilziehen |
| | - Pultrusion/Profilziehen | - ... |
| | - Resin Injektion / Transmission Moulding (RIM/RTM) | |
| | - Wickel-/Flechttechnik | |
| **Kurz- / Stapelfasern** | - Faserspritzen | - (Profil-)Extrusion |
| | - Schleudertechnik | - Spritzgießen Pressen (Hybridgarn, Hybridvlies, Hybridgewebe, Filmstacking...) |
| | - Pressen (Flächengebilde) | |

Tabelle 1 gibt einen Überblick über die verschiedenen Verfahren zur Verarbeitung der entsprechenden Fasern und Matrize.

**Tabelle 2**

| | **Glasfaser** | **Holz-/Pflanzenfaser** | **Regenrat -faser** | **Kohlefaser** |
|---|---|---|---|---|
| **Dichte (kg/m³)** | 2600 | 1400 | 1520 | 1800 |
| **Faserkosten ca. (€/kg)** | 2,00 | 0,50 - 3,50 | 3,50 | 18 - 500 |
| **Zugfestigkeit (MPa)** | 2400 | 400 - 1500 | 200 - 1400 | 3500 |
| **E-Modul (GPa)** | 80 | 10-80 | 3 - 36 | 300 |
| **Spez. Zugfest. (MPa*m³/kg)** | 0,9 | 0,14 - 0,7 | 0,13 - 0,92 | 1,3 - 4 |
| **Spez. E-Modul (MPa*m³/kg)** | 25 - 35 | 6 - 70 | 2 - 24 | 127 |
| **Benchmark Zugfest. (MNm/€)** | 0,45 | 0,3 | 0,25 | 0,06 |
| **Benchmark E-Modul (MNm/€)** | 15 | 25 | 6 | 4 |
| **Splitterneigung** | hoch | gering | gering | hoch |
| **Entsorgung** | gesondert | thermisch | thermisch | gesondert |
| **Bioanteil** | Si - basiert | biobasiert | biobasiert | derzeit fossil |
| **Akustik** | - | dämpfend | eher dämpfend | - |

Tabelle 2 zeigt einige Parameter verschiedener Faserarten. Die Tabelle 2 zeigt dabei, dass z.B. Glasfasern eine hohe Dichte aufweisen, während die Naturfasern oder Regenratfasern geringe Dichten haben.

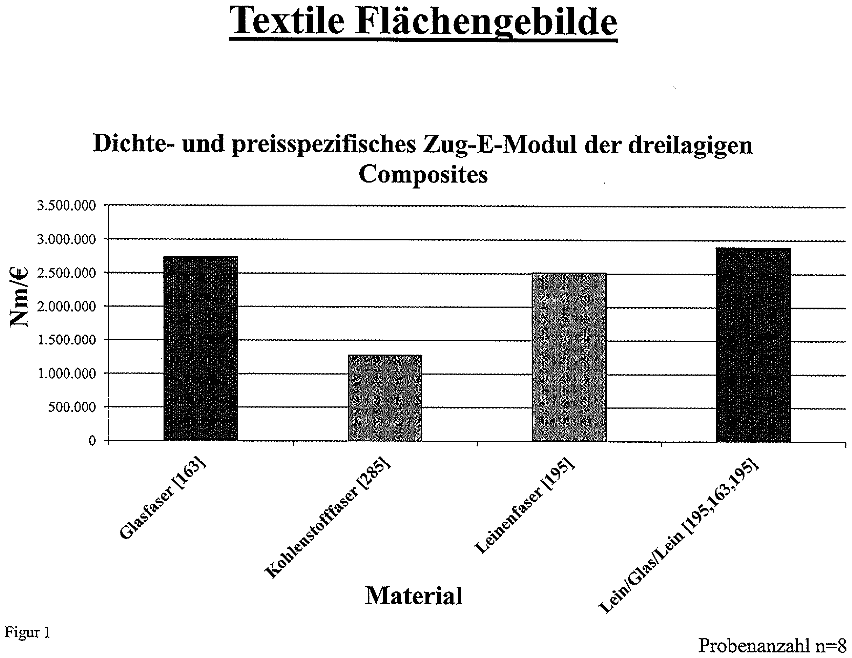

In der Figur 1 ist ein Vergleich von Glasfaser, Kohlestofffaser, Naturfaser (Leinenfaser) und eines Glas- und Naturfaser aufweisenden Faserverbundbauteils dargestellt. Dabei wurde das Zug-E-Modul dreilagiger Komposite bestimmt und mit dem Preis der Fasern berechnet, dargestellt auf der Y-Achse als Zugsteifigkeit pro Euro. Der Vorteil der Glas- und Naturfaser aufweisenden Komposite und Bauteile ist deutlich. Die Zahlen in Klammern geben die Flächengewichte in g/m² an. Die Bestimmung erfolgte dabei wie folgt:

**Tabelle 3**

| **Methodik** | **Prüfkörper** | **Probengeometrie** | **Konditionierung** |
|---|---|---|---|
| **Dichtebestimmung in Ethanol** (DIN EN 1183-1) | - | - | 88 h bei 23°C und rel. Luftfeuchte 50 % (DIN EN ISO 291) |
| **Zugprüfung** (DIN EN ISO 527) | Schulterstäbe Typ 1B mit CNC-Fräse präpariert | ***Probendicke:*** 0,5 - 3 [mm] (abhängig vom Einzellaminat) | 88 h bei 23°C und rel. Luftfeuchte 50 % (DIN EN ISO 291) |
| **Biegeprüfung** (DIN EN ISO 14125) | nach DIN EN ISO 14125 mit CNC-Fräse präpariert | ***Probendicke:*** 0,5 - 3 [mm] (abhängig vom Einzellaminat) | |
| | | ***Probenlänge:*** 10 x Probendicke [mm] | |
| | | ***Probenbreite:*** 15 [mm] | |
| **Interlaminare Scher festigkeit** (DIN EN ISO 14130) | nach DIN EN ISO 14130 mit CNC-Fräse präpariert | ***Probendicke:*** 0,5 - 3 [mm] (abhängig vom Einzellaminat) | 88 h bei 23°C und rel. Luftfeuchte 50 % (DIN EN ISO 291) |
| | | ***Probenlänge:*** 20 x Probendicke [mm] | |
| | | ***Probenbreite:*** 5 x Probendicke 15 [mm] | |

**Tabelle 4**

| **Art** | **Flächengewicht [g/m²]** | **Bindungsart** |
|---|---|---|
| **Kohlefasergewebe** | 285 | Köperbindung 2/2 |
| **Glasfasergewebe** | 163 | Leinwandbindung 2/2 |
| **Glasfasergewebe** | 280 | Leinwandbindung 2/2 |
| **Leinfasergewebe** | 195 | Panamabindung 3/3 |
| **Leinfasergewebe** | 197 | Köperbindung 3/3 |
| **Leinfasergewebe** | 238 | Köperbindung 3/3 |
| **Viskosefasergewebe** | 190 | Atlasbindung 5/1 |

**Tabelle 5**

| **Methodik** | **Anzahl der Schichten** | **Harzsystem** | **Auftragsart** | **Aushärtebedingung** |
|---|---|---|---|---|
| **Vakuumver fahren** (ca. 0,9 bar Unterdruck) | 3 Lagen | Epoxidharz L und einem Härter Epoxidhärter GL2 (Firma R&G) | Pinsel und Rolle | 70 °C / 24h |
| | 5 Lagen | | | |
| | 6 Lagen | | | |

Tabelle 4 zeigt die verwendeten Gewebe, Tabelle 5 die Konditionen zur Anfertigung der Prüfplatten.

## Patentansprüche

1. Faserverbundbauteil aus Faserhalbzeug und einer Matrix, wobei mindestens ein erstes Faserhalbzeug aus partiell oder vollständig bio-basierten Polymerfasern und mindestens ein zweites Faserhalbzeug aus Kohle- oder Glasfasern vorliegen und mindestens ein Faserhalbzeug aus einem Mischgewebe oder einem anderen Flächengebilde aus partiell oder vollständig bio-basierten Polymerfasern und Kohle- oder Glasfasern besteht, **dadurch gekennzeichnet, dass** die Polymerfasern ausgewählt sind aus biobasierten Polyamiden oder Polyamidcopolymeren, PLA, Bio-PET oder anderen partiell oder vollständig bio-basierten Polyestern.

2. Faserverbundbauteil nach Anspruch 1, **dadurch gekennzeichnet, dass** die Faserhalbzeuge Kurz- oder Langfasern oder eine Kombination von beiden enthalten.

3. Faserverbundbauteil nach einem der vorherigen Ansprüche, **dadurch gekennzeichnet, dass** die Faserhalbzeuge aus bio-basierten Fasern im inneren Bereich des Faserverbundbauteils und die Faserhalbzeuge aus Kohlefasern in den äußeren Bereichen des Faserverbundbauteils angeordnet sind.

4. Faserverbundbauteil nach einem der vorherigen Ansprüche, **dadurch gekennzeichnet, dass** in den Faserhalbzeugen Glasfasern vorliegen und die Kohlefasern gegebenenfalls teilweise oder vollständig ersetzen.

5. Verfahren zur Herstellung eines Faserverbundbauteils aus mindestens drei Faserhalbzeugen und einer Matrix, **dadurch gekennzeichnet, dass** mindestens ein erstes Faserhalbzeug aus Polymerfasern und mindestens ein zweites Faserhalbzeug aus Kohle- oder Glasfasern vorliegen und ein Faserhalbzeug aus einem Mischgewebe oder einem anderen Flächengebilde aus Polymerfasern und Kohle- oder Glasfasern vorliegt und diese mit Hilfe einer Matrix unter Aushärtung miteinander verbunden werden, wobei die Polymerfasern partiell oder vollständig bio-basierte Fasern sind und wobei die Polymerfasern ausgewählt sind aus biobasierten Polyamiden oder Polyamidcopolymeren, PLA, Bio-PET oder anderen partiell oder vollständig biobasierten Polyestern.

6. Verfahren nach Anspruch 5, **dadurch gekennzeichnet, dass** mindestens ein Faserhalbzeug aus Polymerfasern zwischen zwei Faserhalbzeugen aus i) Kohlefasern oder ii) einem Mischgewebe oder einem anderen Flächengebilde aus Kohlefasern und Polymerfasern angeordnet ist.

7. Verfahren nach Anspruch 5, **dadurch gekennzeichnet, dass** das Faserverbundbauteil weiterhin ein Glasfasergewebe oder ein Mischgewebe oder ein anderes Flächengebilde mit Glasfasern umfasst oder Glasfaser die Kohlefaser in den Faserhalbzeugen teilweise oder vollständig ersetzt.

## Claims

1. Fibre composite component composed of fibrous semi-finished product and a matrix, wherein at least a first fibrous semi-finished product composed of partially or completely bio-based polymer fibres and at least a second fibrous semi-finished product composed of carbon or glass fibres are present, and at least one fibrous semi-finished product composed of a woven blended fabric or of another planar structure is composed of partially or completely bio-based polymer fibres and carbon or glass fibres, **characterized in that** the polymer fibres are selected from bio-based polyamides or polyamide copolymers, PLA, Bio-PET or other partially or completely bio-based polyesters.

2. Fibre composite component according to Claim 1, **characterized in that** the fibrous semi-finished products contain short or long fibres, or a combination of the two.

3. Fibre composite component according to either of the preceding claims, **characterized in that** the fibrous semi-finished products composed of bio-based fibres are arranged in the inner region of the fibre composite component and the fibrous semi-finished products composed of carbon fibres are arranged in the outer regions of the fibre composite component.

4. Fibre composite component according to one of the preceding claims, **characterized in that** glass fibres are present in the fibrous semi-finished products and possibly partially or completely replace the carbon fibres.

5. Method for producing a fibre composite component composed of at least three fibrous semi-finished products and a matrix, **characterized in that** at least a first fibrous semi-finished product composed of polymer fibres and at least a second fibrous semi-finished product composed of carbon or glass fibres are present, and a fibrous semi-finished product composed of a woven blended fabric or of another planar structure composed of polymer fibres and carbon or glass fibres is present, and said fibrous semi-finished products are connected to one another by means of a matrix by curing, wherein the polymer fibres are partially or completely bio-based fibres and wherein the polymer fibres are selected from bio-based polyamides or polyamide copolymers, PLA, Bio-PET or other partially or completely bio-based polyesters.

6. Method according to Claim 5, **characterized in that** at least one fibrous semi-finished product composed of polymer fibres is arranged between two fibrous semi-finished products composed of i) carbon fibres or ii) a woven blended fabric or another planar structure composed of carbon fibres and polymer fibres.

7. Method according to Claim 5, **characterized in that** the fibre composite component further comprises a woven glass fibre fabric or a woven blended fabric or another planar structure with glass fibres, or glass fibre partially or completely replaces the carbon fibre in the fibrous semi-finished products.

## Revendications

1. Composant composite fibreux de semi-fini fibreux et d'une matrice, dans lequel au moins un premier semi-fini fibreux de fibres polymères partiellement ou entièrement biologiques et au moins un deuxième semi-fini fibreux de fibres de carbone ou de verre sont présents et au moins un semi-fini fibreux est constitué par un tissu mixte ou une autre structure plate de fibres polymères partiellement ou entièrement biologiques et fibres de carbone ou de verre, **caractérisé en ce que** les fibres polymères sont choisies parmi les polyamides biologiques ou les copolymères de polyamide, le PLA, le PET biologique ou d'autres polyesters partiellement ou entièrement biologiques.

2. Composant composite fibreux selon la revendication 1, **caractérisé en ce que** les semi-finis fibreux contiennent des fibres courtes ou longues ou une combinaison des deux.

3. Composant composite fibreux selon l'une quelconque des revendications précédentes, **caractérisé en ce que** les semi-finis fibreux de fibres biologiques sont agencés dans la zone intérieure du composant composite fibreux et les semi-finis fibreux de fibres de carbone sont agencés dans les zones extérieures du composant composite fibreux.

4. Composant composite fibreux selon l'une quelconque des revendications précédentes, **caractérisé en ce que** des fibres de verre sont présentes dans les semi-finis fibreux et éventuellement remplacent partiellement ou entièrement les fibres de carbone.

5. Procédé de fabrication d'un composant composite fibreux d'au moins trois semi-finis fibreux et d'une matrice, **caractérisé en ce qu'**au moins un premier semi-fini fibreux de fibres polymères et au moins un deuxième semi-fini fibreux de fibres de carbone ou de verre sont présents, et un semi-fini fibreux d'un tissu mixte ou d'une autre structure plate de fibres polymères et de fibres de carbone ou de verre est présent, et ceux-ci sont reliés les uns avec les autres avec durcissement à l'aide d'une matrice, les fibres polymères étant des fibres partiellement ou entièrement biologiques et les fibres polymères étant choisies parmi les polyamides biologiques ou les copolymères de polyamide, le PLA, le PET biologique ou d'autres polyesters partiellement ou entièrement biologiques.

6. Procédé selon la revendication 5, **caractérisé en ce qu'**au moins un semi-fini fibreux de fibres polymères est agencé entre deux semi-finis fibreux de i) fibres de carbone ou ii) d'un tissu mixte ou d'une autre structure plate de fibres de carbone et de fibres polymères.

7. Procédé selon la revendication 5, **caractérisé en ce que** le composant composite fibreux comprend en outre un tissu de fibres de verre ou un tissu mixte ou une autre structure plate contenant des fibres de verre, ou des fibres de verre remplacent partiellement ou entièrement les fibres de carbone dans les semi-finis fibreux.
